# FASCICULE DE BREVET EUROPEEN

(11) **EP 0 342 069 B1**
(45) Date de publication et mention de la délivrance du brevet: **10.08.1994**
(21) Numéro de dépôt: 89400985.1
(22) Date de dépôt: 11.04.1989
(51) Int. Cl.: F16K 17/04, F16K 17/168, B64D 13/04

(54) **Vanne à clapet pour un aéronef**
Klappenventil für ein Luftfahrzeug
Flap valve for an aircraft

(30) Priorité: 18.04.1988 FR 8805067
(43) Date de publication de la demande: 15.11.1989
(73) Titulaire: ABG-SEMCA, 31000 Toulouse (FR)
(72) Inventeur: Carla, Françis, F-92045 Paris la Défense (FR); Baroux, Bruno, F-92045 Paris la Défense (FR); Fraisse, Jacques, F-92045 Paris la Défense (FR); Signoret, Jacques, F-92045 Paris la Défense (FR)
(74) Mandataire: Guérin, Michel

(56) Documents cités:
- FR-A- 2 335 885
- GB-A- 4 352
- GB-A- 951 048
- US-A- 2 363 117
- US-A- 3 123 867
- US-A- 3 945 395
- US-A- 4 432 514
- US-A 4 029 290
- US-A 3 544 045

## Description

L'invention se rapporte principalement à une vanne de régulation depression d'aéronef.

D'une part, on connaît des vannes, qui permettent sur commande, de laisser passer un débit désiré d'un fluide entre par exemple deux enceintes au sein desquelles règnent des pressions différentes. Les vannes de type connu permettent de réaliser des régulations de débits ou de pressions. Pour permettre une régulation stable les vannes sont prévues pour fonctionner dans un domaine de débit déterminé. Ainsi, il n'est pas possible, sur commande, par exemple en cas d'incident, d'obtenir, par une ouverture rapide et complète de la vanne l'équilibrage des pressions. De plus, les vannes de type connu n'agissent que sur commande extérieure. Ainsi, la panne du dispositif de commande extérieure rend complètement inefficace la vanne.

D'autre part, on connaît des clapets prévus pour s'ouvrir si la différence de pression sur leurs deux faces excède un seuil prédéterminé. Les clapets permettent de réaliser des dispositifs de sécurité fiables et autonomes. L'ouverture instantanée du clapet permet un équilibrage rapide des pressions de part et d'autre dudit clapet. Par contre, on ne peut pas contrôler le débit passant par un clapet ouvert.

Or, il s'avère que le fait de disposer sur une paroi séparant, par exemple deux enceintes ou, une enceinte de l'extérieur, d'un clapet et d'une vanne pose des problèmes importants. D'une part, il faut disposer de la place nécessaire à la vanne et au clapet. Cela n'est pas toujours le cas notamment si les vannes et clapets doivent être disposés par exemple sur une tuyauterie reliant des tubes de réacteurs chimiques, ou des points d'une colonne de distillation par exemple de pétrole.

D'autre part, le fait de réaliser une ouverture nécessaire au passage de la vanne et du clapet fragilise la paroi. Cette fragilisation pourra être partiellement compensée par une structure par exemple métallique mise en place autour de la vanne et du clapet. Mais cette structure métallique est chère et lourde. Le poids supplémentaire est particulièrement grave dans le cas de réalisations d'aéronefs.

L'invention consiste en une vanne comportant les caractéristiques de la revendication 1. Ainsi, il est possible de réunir tous les avantages de la vanne et du clapet. En effet, en aucun cas deux enceintes ne seront reliées simultanément par une vanne et un clapet ouvert. Un clapet ouvert empêcherait dans un tel cas toute régulation de débit par la vanne. De plus, le dispositif selon la présente invention permet de n'effectuer qu'un trou unique dans la paroi qui le supporte. Ainsi on minimise la fragilisation de la paroi, on diminue le poids par la suppression d'une structure entourant l'ouverture tout en diminuant le coût de fabrication. De plus, dans les cas où la surface disponible est limitée le dispositif selon la présente invention permet de réaliser une ouverture unique plus grande, à la place de deux ouvertures destinées l'une à la vanne, et l'autre au clapet. Ainsi, avec le dispositif selon la présente invention il est possible de réaliser des vannes et des clapets ayant des surfaces d'échange plus grandes et par là même d'améliorer le fonctionnement et la sécurité du dispositif.

L'invention sera mieux comprise au moyen de la description ci-après et des figures annexées données comme des exemples non limitatifs parmi lesquelles :
- la figure 1 est une vue de côté d'un premier exemple de réalisation du dispositif selon la présente invention ;
- la figure 2 est une vue de dessus d'un premier exemple de réalisation du dispositif selon la présente invention ;
- la figure 3 est une vue de dessus d'un second exemple de réalisation du dispositif selon la présente invention ;
- la figure 4 est une vue en perspective d'un aéronef selon la présente invention.

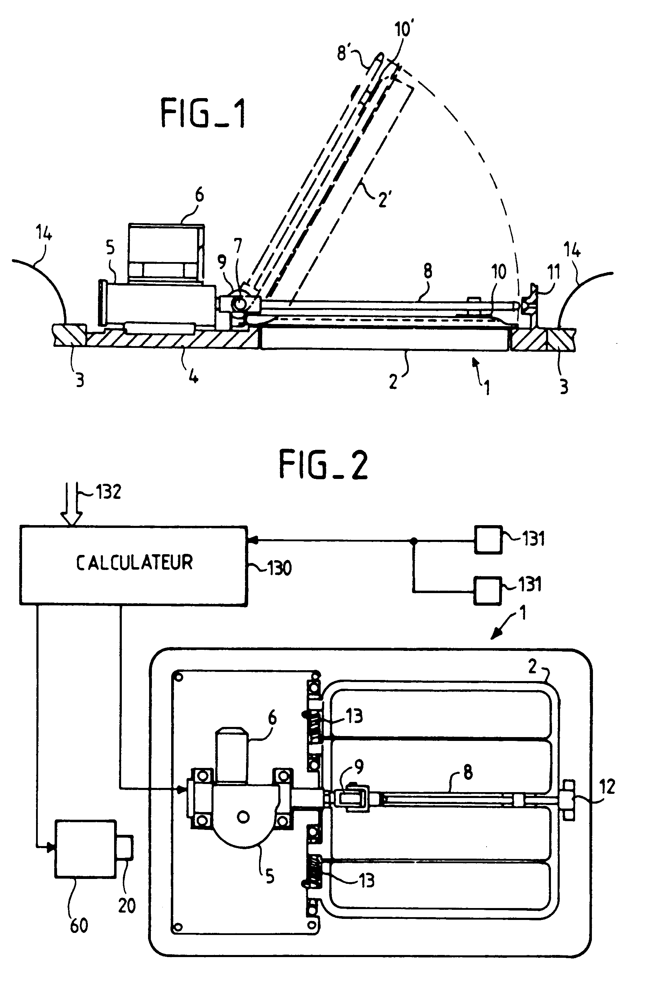

Sur les figures 1 à 4 on a utilisé les mêmes références pour désigner les mêmes éléments.

Sur la figure 1, on peut voir un premier exemple de réalisation d'une vanne 1 selon la présente invention comportant un clapet 2. La vanne illustrée sur la figure 1 est une vanne basculante, par exemple le retrait vers le haut de la figure 1 du volet 4 de la vanne laisse un espace entre le volet 4 d'une part et la paroi 3 et paroi interne évasée 14 plus ou moins grand. Le débit de fluide passant par la vanne 1 dépend de la différence de la pression entre les deux faces de la vanne 1 et la surface dégagée par la vanne.

De façon autonome, le clapet 2 est susceptible de s'ouvrir si la différence de pression sur ses deux faces est supérieure à un seuil. Dans une première version du dispositif selon la présente invention le clapet reste ouvert après l'équilibrage de pression sur ses deux faces.

Avantageusement, le clapet 2 comporte des moyens de rappel assurant sa fermeture après que la différence de pression entre ses deux faces soit redevenue inférieure au seuil d'ouverture. Le clapet 2 est par exemple ramené à la position fermée par deux ressorts. Dans l'exemple de réalisation illustré sur la figure 1 le clapet 2 pivote autour d'un axe 7. Il est à noter que la paroi 3, le volet de la vanne 4, et le clapet 2 forment une surface continue sans aucune aspérité. De telles réalisation peuvent être avantageuses par exemple en aviation. Elles permettent de ne pas augmenter de façon sensible la traîné aérodynamique de l'avion. Toutefois, il faut tenir compte des renforcements de la peau de l'avion suite à la réalisation du trou destiné à laisser passer la vanne 1 comportant le clapet 2.

Il peut s'avérer important de pouvoir isoler hermétiquement les deux faces de la paroi 3 indépendamment des conditions de pression qui y règnent. Par exemple, un dispositif de fermeture du clapet 2 permet de disposer la vanne 1 selon la présente invention sous la ligne de flottaison d'un aéronef. Ainsi en cas d'amerrissage il sera possible au pilote d'effectuer le verrouillage du clapet 2 pour empêcher l'avion de couler. Dans l'exemple de réalisation de la figure 1 le dispositif selon la présente invention comporte des moyens permettant de refermer le clapet 2 à partir d'une position ouverte 2′ et des moyens pour le maintenir fermé de façon définitive. Dans l'exemple de réalisation de la figure 1, le dispositif comporte un moteur 6, avantageusement électrique, animant, sur commande un actionneur 5. L'actionneur 5 comporte par exemple une crémaillère et des engrenages. Sur la crémaillère est disposé un galet presseur 9. Sur commande, le moteur 6 fait avancer la crémaillère 9 comportant le galet 9. Le galet 9 vient appuyer sur le volet 2′ et assure sa fermeture. Avantageusement, l'actionneur 5 est un actionneur irréversible de type connu. On appelle actionneur irréversible un ensemble mécanique qui, s'il n'est pas animé, par exemple par le moteur 6, garde sa position. Ainsi, le galet 9 bloque la paroi 2 du clapet. Toutefois, dans la mesure où on veut assurer une sécurité maximale la crémaillère 9 est prolongée par une tige 8 (référencée 8′ en position ouverte), susceptible en position fermée de prendre place dans un verrou 11. Avantageusement, à la tige 8 est reliée une pièce de maintien 10 (référencée 10′ en position ouverte) appuyant de l'intérieur sur la paroi du clapet 2.

Dans l'exemple de réalisation illustré sur la figure 1, la tige 8 pivote autour de l'axe 7 pour permettre le bon fonctionnement normal du clapet 2.

Le clapet 2′, la tige 8′ et la pièce de maintien 10′ sont représentés en position ouverte avec des lignes pointillées sur la figure 1.

Sur la figure 2, on peut voir la valve 1 vue de dessus. Dans l'exemple illustré sur la figure 2 le clapet est verrouillé en position fermée, la tige 8 étant engagée dans le verrou 12. Dans l'exemple de réalisation de la figure 2, le clapet est maintenu fermé par deux ressorts 13 placés symétriquement par rapport à l'axe. Les ressorts 13 sont placés symétriquement pour permettre au galet presseur 12 et à la tige 8 d'occuper la position centrale. Il est bien entendu que d'autres dispositions ne sortent pas du cadre de la présente invention. Le moteur peut être remplacé par un électro-aimant. La commande du moteur 6 assurant la fermeture et le verrouillage du clapet 2 est assurée soit directement, à partir par exemple du tableau de bord de l'avion, soit par l'intermédiaire d'un calculateur 130 comme illustré sur la figure. Avantageusement on utilise le même calculateur pour commander le moteur 60 qui assure l'ouverture et la fermeture de la vanne 1. Dans un exemple de réalisation le calculateur 130 reçoit les informations par exemple sur la pression régnant à l'intérieur de l'avion à partir de capteurs 131 et par exemple l'information sur la pression externe par un bus 132. L'information sur la pression externe provient par exemple d'un autre calculateur de vol.

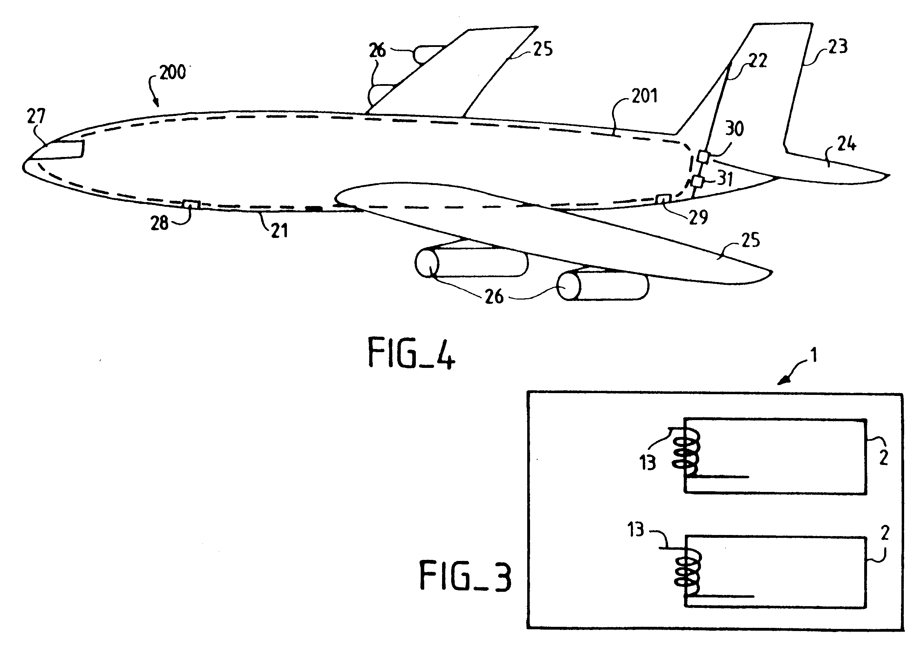

Sur la figure 3, on peut voir une variante de réalisation du dispositif selon la présente invention. Dans le cas de la figure 3, la vanne 1 comporte deux clapets 2. L'utilisation de deux clapets permet de fixer deux seuils de différence de pression pour l'ouverture de clapets. Cette différence de seuil est possible par l'utilisation de deux ressorts 13 ayant des forces différentes ou en donnant des surfaces différentes au clapet 2. Dans une variante de réalisation, on dispose de deux clapets 2 susceptibles de s'ouvrir chacun dans un sens différent.

D'autres variantes ne sortent pas du cadre de la présente invention. Par exemple, il est possible de réaliser une vanne sur la surface d'un clapet. Cette solution sera adaptée notamment quand la surface des clapets devra être supérieure à celle de la vanne.

Sur la figure 4, on peut voir un aéronef 200 selon la présente invention. L'aéronef 200 comprend une enceinte pressurisée 201, deux ailes 25, par exemple quatre moteurs 26, un gouvernail vertical 23, deux empannages 24 et un cockpit 27.

L'enceinte pressurisée 201 est délimitée par la structure extérieure 21 de l'avion appelée peau et par une paroi arrière 22. La paroi arrière 22 est relativement fragile pour réduire la masse de l'avion. Cette enceinte pressurisée doit comporter deux soupapes de sécurité chargées de limiter en surpression et en dépression la différence de pression entre l'enceinte pressurisée et extérieur et ainsi d'éviter toute déformation de la structure de l'avion.

Cette différence de pression peut provenir en surpression d'une panne de régulation et en dépression d'un changement rapide d'altitude (descente urgente) par exemple.

Il est parfois nécessaire d'ajouter un élément supplémentaire aux deux soupapes de sécurité si celle-ci ne suffisent pas à assure les sécurités (pour des raisons d'encombrement, de place pour loger les soupapes). On ajoute alors un clapet de dépression qui permet de couvrir les cas de pannes d'une soupape et d'assurer avec les deux soupapes les conditions de sécurité normale.

L'avion 200 comporte en outre une vanne de régulation 28 et une vanne de ventilation 29. La vanne de régulation est prévue pour exécuter ce que l'on appelle "les séquences de vol" c'est-à-dire pour réguler la pression interne de façon à assurer le confort des passagers. La vanne de ventilation 29 permet un équilibrage complet des pressions lors de l'arrêt de l'avion. Il faut remarquer que les avions modernes comme par exemple l'avion de la série AIRBUS A300, A310, A320, A330 et A 340 comportent des volumes importants et ont des possibilités de manoeuvre avec changement d'altitude rapide. Ainsi, il est impératif de pouvoir effectuer les équilibrages de pression rapides pour empêcher d'endommager la structure de l'avion par une trop forte différence de pression. Ainsi, il est nécessaire d'introduire un clapet qui dans le cas d'une descente rapide de l'avion permettrait à l'air extérieur de rentrer à l'intérieur, pour réaliser un tel équilibre. Or, comme il était présenté précédemment le fait de placer un clapet et de faire un trou sur la peau de l'avion présente des inconvénients graves. D'autre part, du fait des performances et le volume de l'avion, les soupapes de sécurité 30 et 31 risquent de s'avérer insuffisantes en cas d'incident. Ainsi, il est avantageux d'utiliser les vannes des figures 1 à 3 pour réaliser la vanne de régulation et/ou la vanne de ventilation.

Avantageusement, c'est la vanne de ventilation qui normalement durant le vol n'est pas active qui contient le clapet 2 des figures 1 à 3.

Avantageusement, on dispose les vannes 28 et 29 sur le ventre de l'avion, en dessous de la ligne de flottaison. Ainsi on facilite la maintenance qui peut se faire par le bas et d'autre part on facilite l'écoulement d'air de climatisation dont l'admission se situe dans la partie haute de l'avion. Ainsi il est impératif pour assurer la sécurité de l'avion en cas d'amerrissage de permettre le blocage du clapet 2. Le blocage du clapet est par exemple obtenu par le dispositif illustré sur les figures 1 et 2. Le blocage est obtenu par le fonctionnement du commutateur marqué "ditching" sur le tableau de commande de l'avion.

La réalisation de vannes "papillon" ou de vannes à deux volets à récupération de poussée comprenant un clapet ne sort pas du cadre de la présente invention.

Le dispositif selon la présente invention s'applique à tout dispositif de régulation de pression et/ou de débit entre une enceinte et l'extérieur ou entre deux enceintes comportant un dispositif d'équilibrage de sécurité.

## Revendications

1. Vanne (1) de régulation de pression d'aéronef comportant au moins un volet (4), sur le volet étant disposé au moins un clapet (2) participant à l'équilibrage automatique des pressions existant de part et d'autre de la vanne (1), ledit équilibrage s'effectuant à l'aide de l'ouverture ou de la fermeture automatique du clapet (2) quand la différence des pressions existant sur les deux faces de celui-ci dépasse un certain seuil.

2. Vanne (1) selon la revendication 1, caractérisée en ce que chaque clapet (2) comprend des moyens (13) de rappel permettant de définir un seuil de différence de pressions différent de celui des autres clapets.

3. Vanne (1) selon la revendication 1 ou 2, caractérisé en ce qu'elle comprend au moins un premier clapet (2) destiné à s'ouvrir dans un premier sens si la pression régnant sur une première face du premier clapet est supérieure à la pression régnant sur sa seconde face et au moins un deuxième clapet (2) destiné à s'ouvrir dans un second sens si la pression régnant sur la seconde face du deuxième clapet est supérieure à la pression régnant sur sa première face.

4. Vanne (1) selon l'une quelconque des revendications 1 à 3, caractérisée en ce qu'elle est une vanne de régulation de la pression interne de l'aéronef de façon à assurer le confort des passagers lors des séquences de vol.

5. Vanne (1) selon l'une quelconque des revendications 1 à 3, caractérisée en ce qu'elle est une vanne de ventilation permettant un équilibrage des pressions lors de l'arrêt de l'avion.

6. Vanne (1) selon l'une quelconque des revendications précédentes caractérisée en ce qu'elle est positionnée sur le ventre de l'avion, en dessous de la ligne de flottaison.

## Claims

1. Aircraft pressure regulating valve (1) including at least one shutter (4) and at least one flap (2), participating in the automatic balancing of the pressures existing on either side of the valve (1) and being arranged on the shutter, the said balancing taking place by automatic opening or closing of the flap (2) when the difference in the pressures existing on the two faces of it exceeds a certain threshold.

2. Valve (1) according to Claim 1, characterized in that each flap (2) comprises return means (13) making it possible to define a pressure difference threshold different from that of the other flaps.

3. Valve (1) according to Claim 1 or 2, characterized in that it comprises at least a first flap (2) intended to open in a first direction if the pressure prevailing on a first face of the first flap is greater than the pressure prevailing on its second face, and at least a second flap (2) intended to open in a second direction if the pressure prevailing on the second face of the second flap is greater than the pressure prevailing on its first face.

4. Valve (1) according to any one of Claims 1 to 3, characterized in that it is a valve for regulating the internal pressure of the aircraft so as to ensure comfort of the passengers during the flight sequences.

5. Valve (1) according to any one of Claims 1 to 3, characterized in that it is a ventilation valve allowing balancing of the pressures when the aeroplane is stopped.

6. Valve (1) according to any one of the preceding claims, characterized in that it is positioned on the underside of the aeroplane, below the water line.

## Patentansprüche

1. Ventil (1) zum Regeln des Drucks eines Luftfahrzeugs, mit wenigstens einer Ventilklappe (4), wobei auf der Ventilklappe wenigstens eine Klappe (2) angeordnet ist, die am automatischen Ausgleich der auf der einen und auf der anderen Seite des Ventils (1) herrschenden Drücke mitwirkt, wobei der Ausgleich mit Hilfe des automatischen Öffnens oder Schließens der Klappe (2) bewirkt wird, wenn der Unterschied zwischen den auf den beiden Seiten der Klappe herrschenden Drücken eine bestimmte Schwelle überschreitet.

2. Ventil (1) nach Anspruch 1, dadurch gekennzeichnet, daß jede Klappe (2) Rückstellmittel (13) enthält, die das Definieren einer Druckdifferenzschwelle ermöglichen, die von den Druckdifferenzschwellen der anderen Ventile verschieden ist.

3. Ventil (1) nach Anspruch 1 oder 2, dadurch gekennzeichnet, daß es wenigstens eine erste Klappe (2) enthält, die dazu vorgesehen ist, sich in einer ersten Richtung zu öffnen, wenn der auf einer ersten Seite der ersten Klappe herrschende Druck größer als der auf ihrer zweiten Seite herrschende Druck ist, und wenigstens eine zweite Klappe (2), die dazu vorgesehen ist, sich in einer zweiten Richtung zu öffnen, wenn der auf der zweiten Seite der zweiten Klappe herrschende Druck größer als der auf ihrer ersten Seite herrschende Druck ist.

4. Ventil (1) nach einem der Ansprüche 1 bis 3, dadurch gekennzeichnet, daß es ein Ventil zum Regeln des Innendrucks eines Luftfahrzeugs ist, so daß der Komfort der Passagiere während des Ablaufes des Fluges gewährleistet ist.

5. Ventil (1) nach einem der Ansprüche 1 bis 3, dadurch gekennzeichnet, daß es ein Belüftungsventil ist, das einen Ausgleich der Drücke bei einem Stillstand des Flugzeugs erlaubt.

6. Ventil (1) nach einem vorhergehenden Ansprüche, dadurch gekennzeichnet, daß es am Bauch des Flugzeuges unterhalb der Wasserlinie angeordnet ist.
